# EUROPÄISCHE PATENTSCHRIFT

(11) **EP 0 980 853 B1**
(45) Veröffentlichungstag und Bekanntmachung des Hinweises auf die Patenterteilung: **02.01.2004**
(21) Anmeldenummer: 99113466.9
(22) Anmeldetag: 13.07.1999
(51) Int. Cl.: C04B 24/42

(54) **Hydrophobierte mineralische Dämmplatte und Verfahren zu deren Herstellung**
Mineral insulating board which is made hydrophobic and method for its manufacture
Plaque minérale isolante rendue hydrophobe et son procédé de préparation

(30) Priorität: 17.08.1998 DE 19837170
(43) Veröffentlichungstag der Anmeldung: 23.02.2000
(73) Patentinhaber: Veit Dennert KG Baustoffbetriebe, D-96130 Schlüsselfeld (DE)
(72) Erfinder:
(74) Vertreter: Hübner, Gerd, Dipl.-Phys.

(56) Entgegenhaltungen:
- EP-A- 0 053 223
- DE-A- 3 840 579
- DE-C- 19 723 426
- GB-A- 2 043 047
- US-A- 5 302 335

## Beschreibung

Die Erfindung betrifft eine hydrophobierte mineralische Dämmplatte, die aus einer porosierten Feststoff/Wasser-Suspension hergestellt wird sowie ein Verfahren zur Herstellung einer solchen Platte.

Eine solche mineralische Dämmplatte und ein entsprechendes Verfahren zu ihrer Herstellung ist aus der DE 197 23 426 C 1 bekannt. Demnach wird zur Herstellung dieser Dämmplatte eine Feststoff/Wasser-Suspension durch intensives Mischen von Quarzmehl, Kalkhydrat, Zement, Hydrophobiermittel und Wasser erstellt. Ein Schaum aus Wasser, Luft und Porenbildner wird in die Feststoff/Wasser-Suspension eingeleitet, wodurch eine porosierte Rohmischung für die Dämmplatte entsteht. Diese Rohmischung wird in jeweilige Formen gegossen, wo sie ansteift. Anschließend werden die so gebildeten Plattenkörper autoklaviert.

Die GB 2 043 047 A offenbart einen dampfgehärteten, hydrophoben Leichtbeton, bei dem - wie bei dem Dämmplattenmaterial gemäß der vorgenannten DE 197 23 426 C1 - als Hydrophobiermittel Silikonöl mit einem Anteil von maximal 0,5 % bezogen auf das Trockengewicht der Ausgangsmischung eingesetzt wird.

Die EP 0 053 223 A1 offenbart ein Verfahren zum Herstellen von Bausteinen oder Bauteilen, wobei das dabei verwendete Baumaterial zur Hydrophobierung ein Organo(Poly)Siloxan enthält, das das beim Stand der Technik übliche Silikonöl ersetzt.

Grundsätzlich besteht bei den einschlägigen mineralischen Dämmplatten, wie sie u. a. auch aus der DE 43 39 137 A1, DE 43 27 074 A 1 und DE 44 08 088 A 1 bekannt sind, die Problematik, daß die Festigkeit aufgrund der Porosität begrenzt ist. Festigkeit und Porosität und damit Wärmedämmfähigkeit sind dabei widerstreitende Parameter, da eine Erhöhung der Festigkeit im wesentlichen nur durch eine Erhöhung des Feststoffanteils, also des Zement- und/oder Kalkanteils in Form von Kalkhydrat oder Branntkalk herbeizuführen ist. Durch diese Erhöhung würde jedoch der

Porositätsgrad erniedrigt werden, was wiederum zu einer Erhöhung der Dichte der Dämmplatte und damit zu einer Erniedrigung der Wärmedämmeigenschaften führt.

Ferner wurde festgestellt, daß die Untermischung des Hydrophobiermittels in die Feststoff/Wasser-Suspension eben aufgrund seiner hydrophoben Eigenschaften problematisch ist. Gelingt es nicht, eine gleichmäßige Untermischung zu erzielen, so bilden sich "Nester" des Hydrophobiermittels im Volumen der Dämmplatte, was zu Inhomogenitäten und damit zu Festigkeitseinbußen, zu Zonen mit verminderter Hydrophobierung usw. führen kann.

Ausgehend von der geschilderten Problematik liegt der Erfindung die Aufgabe zugrunde, eine hydrophobierte mineralische Dämmplatte und ein Verfahren zu ihrer Herstellung zu schaffen, bei der eine sehr homogene Hydrophobierung unter gleichzeitiger Festigkeitserhöhung erreicht wird.

Die Lösung dieser Aufgabe ist in produkttechnischer Hinsicht durch die Merkmale des Anspruchs 1 und in verfahrenstechnischer Hinsicht durch die Merkmale des Anspruchs 5 gegeben.

Als Kern der Erfindung stellt sich demnach der gegenüber dem Stand der Technik drastisch erhöhte Massenanteil des als Hydrophobiermittel eingesetzten Silikonöls von 0,7 bis 1,5 Masse-% bezogen auf den Feststoffanteil der Suspension dar. Beim Stand der Technik beträgt dieser Masseanteil - wie erläutert - lediglich 0,3 bis 0,5 Masse-%.

Neben den vorstehend wiedergegebenen produkttechnischen Merkmalen, wie sie Patentanspruch 1 prägen, wird die Erfindung in verfahrenstechnischer Hinsicht durch die Merkmale des Anspruches 5 wie folgt charakterisiert:
- Herstellen einer Suspensions-Vormischung aus dem kompletten Wasseranteil und einem geringen Zementanteil,
- Einmischen des Emulgators oder anschließende Anwendung physikalischer Maßnahmen zur Feinverteilung des nachfolgend als Hydrophobiermittels zugemischten Silikonöls,
- Einmischen des Silikonöls mit einem Massenanteil von 0,7 bis 1,5 Masse-% bezogen auf den Feststoffanteil der Feststoff/Wasser-Suspension,
- Zuführen und Untermischen der verbleibenden Feststoffanteile der Feststoff/Wasser-Suspension in die Vormischung,
- Porosieren der Suspension durch Einmischen von Schaum in die Suspension,
- Füllen der porosierten Feststoff/Wasser-Suspension in Plattenformen, und
- Reifen und Autoklavieren der so gebildeten Dämmplattenkörper.

Es wurde ferner festgestellt, daß durch die Zugabe des weiterhin erfindungsgemäß vorgesehenen Emulgators ein erhöhter Massenanteil an Hydrophobiermittel problemlos in die Feststoff/Wasser-Suspension in sehr homogener Weise eingebracht werden kann. Dadurch werden die eingangs erörterten "Nester" an Hydrophobiermittel mit den daraus resultierenden Nachteilen vermieden. Ersatzweise können statt eines chemischen Emulgiermittels auch physikalische Maßnahmen zur Feinverteilung des Hydrophobiermittels vorgenommen werden, z. B. Ultraschallanwendung.

Durch den erhöhten Anteil an sehr homogen verteiltem Silikonöls hat sich ferner der äußert überraschende Effekt ergeben, daß sich gleichzeitig eine Festigkeitssteigerung bei der Wärmedämmplatte als Endprodukt einstellt. So wurde bei gleichen Ausgangsrezepten und identischen Rohdichten durch eine Erhöhung des Hydrophobiermittelanteils von rund 0,5 Masse-% (dies entspricht der Obergrenze des Hydrophobiermittelanteils gemäß dem eingangs erörterten Stand der Technik) auf 1,5 Masse-% eine Festigkeitssteigerung bei der Dämmplatte von knapp 0,45 N/mm² auf knapp 0,5 N/mm² erzielt wurde. Dies entspricht einer Festigkeitsverbesserung von mehr als 10 %.

Eine Zugabe von Silikonöl als Hydrophobiermittel mit einem Massenanteil von 0,8 Masse-% hat sich als vorteilhaft erwiesen.

Im Hinblick auf eine Festigkeitssteigerung der mineralischen Dämmplatte ist es schließlich auch vorteilhaft, die autoklavierten Dämmplatten in einen Haftvermittler (Primer) zu tauchen oder zumindest auf einer Seite - beispielsweise indem ein sogenanntes Sprühband unterlaufen wird - damit zu beschichten, wodurch die Platte nach der anschließenden Trocknung an der Oberfläche sehr hart und nicht staubend ausgeführt ist. Dadurch wird die Platte nicht nur sehr unempfindlich gegen mechanische Einwirkungen von außen, sondern es vereinfacht sich auch die Verarbeitung der Dämmplatte, d. h. das Anbringen an einer Hauswand. Der dafür notwendige Klebemörtel kann direkt an die Hauswand gespritzt oder auf die Platten aufgebracht werden. Anschließend kann die Dämmplatte ohne größere Einmassierung des Klebermörtels an der Dämmplatte sehr einfach an die Hauswand gedrückt werden, wo sie sofort haftet.

Durch den Einsatz eines Haftvermittlers können auch Mineralputze auf der Dämmplatte verwendet werden, die keine oder nur wenige Kunststoffanteile aufweisen. Fehlt dieser Haftvermittler, so sollten die auf die Dämmplatte als Außenhaut aufzubringenden Putze - obwohl sie mineralischen Ursprungs sein können - einen gewissen Anteil an Kunststoffen beinhalten, um die Klebekraft an der Dämmplatte zu erhöhen. Dies ist wegen den hydrophoben Charakters der Dämmplatte ein kritischer Punkt.

Die Erfindung wird anhand eines Ausführungsbeispiels nachfolgend näher erläutert.

Bei der Herstellung der Platte wird von folgender Grundrezeptur bezogen auf den Feststoffanteil der Feststoff/Wasser-Suspension ausgegangen, deren Wasser/Feststoff-Masseverhältnis zwischen 0,50 und 0,65 und vorzugsweise bei ca. 0,58 liegt:
- Zement: 35 bis 45 Masse-%, vorzugsweise ca. 40 Masse-%,
- Quarzmehl: 45 bis 55 Masse-%, vorzugsweise ca. 50 Masse-%,
- Kalk (in Form von Kalkhydrat oder Branntkalk): 5 bis 15 Masse-%, vorzugsweise ca. 10 Masse-%.

Als konkrete Beispielsrezeptur werden verwendet:
- Wasser: 180 1
- Zement: 127 kg
- Quarzmehl: 155 kg
- Kalkhydrat: 28 kg
- Handelsübliches Silikonöl: 2,5 1
- Emulgator: 40 ml

Verfahrenstechnisch wird wie folgt vorgegangen:
- Es wird eine Suspensions-Vormischung aus dem kompletten Anmachwasser von 180 1 und mit einem Zementanteil von 20 kg zur Erhöhung des pH-Wertes in einem Rührwerksmischer vermischt.
- Danach werden 40 ml eines handelsüblichen alkalibeständigen flüssigen Emulgators pneumatisch in den Mischbehälter eindosiert, wonach wieder kurz gemischt wird.
- Danach wird in diese Suspensions-Mischung das Hydrophobiermittel in Form von 2,5 1 Silikonöl eingebracht und ebenfalls eingemischt.
- Schließlich werden noch Quarzmehl mit einem hohen Feinheitsgrad, der verbleibende Zement von 107 kg und das Kalkhydrat mit den obenbezeichneten Mengen zugeführt und die damit gebildete gesamte Feststoff/Wasser-Suspension wenige Minuten lang gemischt. Innerhalb dieser Zeit wird eine hoch-homogenisierte Feststoff/Wasser-Suspensionsmasse erzeugt.
- Diese Masse wird einem Zwischenrührwerk übergeben, von dem aus die Masse über eine Schneckenwalkpumpe kontinuierlich einem Durchlaufmischer mit aktiven Rührflügeln, einem sogenannten "Turbomischer" zugeführt wird. Vor diesem wird der parallel aus Wasser, Luft und Porenbildner hergestellte Schaum in einem geschlossenen System zudosiert, so daß im Turbomischer aus Schaum und Suspensions-Masse ein homogener Schaumbeton entsteht.
- Die porosierte Feststoff/Wasser-Suspension in Form des vorgenannten Schaumbetons wird anschließend in Plattenformen gefüllt, die in eine Reifekammer gelangen. Nach entsprechender Reifezeit werden die Schaumbetonplatten in üblicher Weise autoklaviert und in einer Kalibriervorrichtung auf Maß gebracht.
- Danach werden die autoklavierten Platten in einen Haftvermittler (Primer) getaucht.
- Beim abschließenden Trocknungsprozeß auf einen bestimmten Restfeuchtigkeitsgehalt werden die Platten durch den Haftvermittler an ihrer Oberfläche sehr hart und nicht staubend.
- Danach werden die Dämmplatten in entsprechenden Verpackungseinheiten in Schrumpffolie gehüllt.

Zusammenfassend werden durch die Erfindung und insbesondere durch den erhöhten Hydrophobiermittelanteil in Kombination mit einem zusätzlichen Emulgator mineralische Dämmplatten erzeugt, die sehr homogen hydrophobiert sind. Dies kann durch Wasser-Eindring-Versuche nachgewiesen werden. Durch die homogene Einmischung des Hydrophobiermittels in Verbindung mit dem Emulgator wird auch eine an sich nicht zu erwartende Festigkeitssteigerung erzielt.

## Patentansprüche

1. Hydrophobierte, mineralische Dämmplatte hergestellt aus einer porosierten Feststoff/Wasser-Suspension mit einem Feststoffanteil aus Zement, Kalk, Siliziumdioxid-Material, insbesondere Quarzmehl, und Schaum, wobei der Massenanteil eines enthaltenen Hydrophobiermittels über 0,7 Masse-% bezogen auf den Feststoffanteil der Suspension liegt und vorzugsweise ein Emulgator enthalten ist **dadurch gekennzeichnet, daß** als Hydrophobiermittel Silikonöl mit einem Massenanteil von 0,7 bis 1,5 Masse-% enthalten ist.

2. Dämmplatte nach Anspruch 1, **dadurch gekennzeichnet, daß** Silikonöl mit einem Massenanteil von 0,8 Masse-% enthalten ist.

3. Dämmplatte nach einem der vorgenannten Ansprüche **gekennzeichnet durch** folgende Grundrezeptur bezogen auf den Feststoffanteil der Feststoff/Wasser-Suspension, deren Wasser/Feststoff-Masseverhältnis zwi-) schen 0,50 und 0,65, vorzugsweise ca. 0,58 beträgt:
- Zement: 35 bis 45 Masse-%, vorzugsweise ca. 40 Masse-%,
- Quarzmehl: 45 bis 55 Masse-%, vorzugsweise ca. 50 Masse-%, und
- Kalk: 5 bis 15 Masse-%, vorzugsweise ca. 10 Masse-%.

4. Dämmplatte nach einem der Ansprüche I bis 3, **dadurch gekennzeichnet, daß** mindestens ein Teil der Oberfläche mit einem Haftvermittler gehärtet ist.

5. Verfahren zur Herstellung einer hydrophobierten mineralischen Dämmplatte gemäß einem der Ansprüche 1 bis 4 mit folgenden Verfahrensschritten:
- Herstellen einer Suspensions-Vormischung aus dem kompletten Wasseranteil und einem geringen Zementanteil,
- Einmischen des Emulgators oder anschließende Anwendung physikalischer Maßnahmen zur Feinverteilung des nachfolgend als Hydrophobiermittels, eingemischten Silikonöls,
- Einmischen des Silikonöls mit einem Massenanteil von 0,7 bis 1,5 Masse-% bezogen auf den Feststoffanteil der Feststoff/Wasser-Suspension,
- Zuführen und Untermischen der verbleibenden Feststoffanteile der Feststoff/Wasser-Suspension in die Vormischung,
- Porosieren der Suspension durch Einmischen von Schaum in die Suspension,
- Füllen der porosierten Feststoff/Wasser-Suspension in Plattenformen, und
- Reifen und Autoklavieren der so gebildeten Dämmplattenkörper.

6. Verfahren nach Anspruch 5, **dadurch gekennzeichnet, daß** als Hydrophobiermittel Silikonöl in einem Massenanteil von ca. 0,8 Masse-% zugegeben wird.

7. Verfahren nach Anspruch 5 oder 6, **dadurch gekennzeichnet, daß** die Dämmplatte auf der Basis folgender Grundrezeptur bezogen auf den Feststoffanteil der Feststoff/Wasser-Suspension hergestellt wird, deren Wasser/Feststoff-Masseverhältnis zwischen 0,50 und 0,65, vorzugsweise bei ca. 0,58 liegt:
- Zement: 35 bis 45 Masse-%, vorzugsweise ca. 40 Masse-%,
- Quarzmehl: 45 bis 55 Masse-%, vorzugsweise ca. 50 Masse-%, und
- Kalk: 5 bis 15 Masse-%, vorzugsweise ca. 10 Masse-%.

8. Verfahren nach einem der Ansprüche 5 bis 7, **dadurch gekennzeichnet, daß** die autoklavierten Plattenkörper an zumindest einem Teil ihrer Oberfläche mit einem Haftvermittler versehen werden.

9. Verfahren nach Anspruch 8, **dadurch gekennzeichnet, daß** die Plattenkörper in ein Haftvermittlerbad eingetaucht werden.

## Claims

1. Hydrophobic mineral insulating board made from a porous solid/water suspension with a solid portion of cement, lime, silicon-dioxide material, in particular quartz powder, and foam, wherein the mass percentage of an included water repellent ranges above 0.7 % by weight related to the solid portion of the suspension and wherein an emulsifier is preferably included, **characterized in that** silicone oil of a mass percentage of 0.7 to 1.5 % by weight is included as a water repellent.

2. Insulating board according to claim 1, **characterized in that** silicone oil of a mass percentage of 0.8 % by weight is included.

3. Insulating board according to one of the preceding claims, **characterized by** the following basic recipe related to the solid portion of the solid/water suspension, the water/solid mass percentage of which amounts to between 0.50 and 0.65, preferably 0.58:
- cement: 35 to 45 % by weight, preferably approximately 40 % by weight;
- quartz powder: 45 to 55 % by weight, preferably 50 % by weight; and
- lime: 5 to 15 % by weight, preferably approximately 10 % by weight.

4. Insulating board according to one of claims 1 to 3, **characterized in that** at least part of the surface is hardened by an adhesion agent.

5. Method for the manufacture of a hydrophobic mineral insulating board according to one of claims 1 to 4, comprising the following steps:
- preparing a suspension pre-mix of the complete portion of water and a small portion of cement;
- admixing the emulsifier or subsequent application of physical measures for fine distribution of the silicone oil that is subsequently admixed as a water repellent;
- admixing the silicone oil at a mass percentage of 0.7 to 1.5 % by weight related to the solid portion of the solid/water suspension;
- adding and mixing to the pre-mix the remaining solid portions of the solid/water suspension;
- rendering the suspension porous by admixing foam to the suspension;
- filling the porous solid/water suspension into board molds; and
- maturing and autoclaving the insulating boards thus formed.

6. Method according to claim 5, **characterized in that** silicone oil of a mass percentage of approximately 0.8 % by weight is added as a water repellent.

7. Method according to claim 5 or 6, **characterized in that** the insulating board is prepared, based on the following basic recipe related to the solid portion of the solid/water suspension, the water/solid mass ratio of which ranging between 0.50 and 0.65, preferably being in the range of approximately 0.58:
- cement: 35 to 45 % by weight, preferably approximately 40 % by weight;
- quartz powder: 45 to 55 % by weight, preferably approximately 50 % by weight; and
- lime: 5 to 15 % by weight, preferably approximately 10 % by weight.

8. Method according to one of claims 5 to 7, **characterized in that** at least part of the surface of the autoclaved boards is equipped with an adhesion agent.

9. Method according to claim 8, **characterized in that** the boards are immersed in a bath of an adhesion agent.

## Revendications

1. Plaque minérale isolante, imperméabilisée, réalisée à partir d'une suspension de matière solide rendue poreuse/eau avec une partie de matière solide de ciment, chaux, matière de dioxyde de silicium, en particulier de la poudre de quartz et de la mousse, tandis que la partie en masse d'un moyen imperméabilisant se situe au-dessus de 0,7% en masse rapporté à la partie de matière solide de la suspension et un émulsifiant est de préférence incorporé,
**caractérisée en ce qu'**en tant que moyen imperméabilisant, on introduit de l'huile de silicone à raison d'une partie en masse de 0,7 à 1,5 % en masse.

2. Plaque isolante selon la revendication 1, **caractérisée en ce que** l'on introduit de l'huile de silicone à raison d'une partie en masse de 0,8% en masse.

3. Plaque isolante selon l'une des revendications précédentes, **caractérisée par** la formulation de base suivante rapportée à la partie de matière solide de la suspension de matière solide/eau dont le rapport en masse eau/matière solide se situe entre 0,50 et 0,65, de préférence environ 0,58:
- ciment : 35 à 45 % en masse, de préférence environ 40% en masse,
- poudre de quartz : 45 à 55 % en masse, de préférence environ 50% en masse, et
- chaux : 5 à 15% en masse, de préférence environ 10% en masse.

4. Plaque isolante selon l'une des revendications 1 à 3, **caractérisée en ce qu'**au moins une partie de la surface est durcie au moyen d'un agent d'adhésivité.

5. Procédé pour la fabrication d'une plaque minérale isolante imperméabilisée selon l'une des revendications 1 à 4 comportant les étapes opératoires suivantes:
- préparation d'un pré-mélange de suspension à partir de la partie d'eau complète et d'une faible partie de ciment,
- introduction et mélange de l'émulsifiant ou application subséquente de mesures physiques pour la fine répartition de l'huile de silicone introduite et mélangée en tant que moyen imperméabilisant,
- introduction et mélange de l'huile de silicone ayant une partie en masse de 0,7 à 1,5% en masse rapportée à la partie de matière solide de la suspension matière solide/eau,
- amenée et sous-mélange des parties de matière première restantes de la suspension matière solide/eau dans le pré-mélange,
- formation de la porosité dans la suspension par introduction et mélange de mousse dans celle-ci,
- remplissage de la suspension de matière solide rendue poreuse sous forme de plaques, et
- mûrissement et mise en autoclave des corps de plaque isolante ainsi formés.

6. Procédé selon la revendication 5, **caractérisé en ce qu'**en tant qu'agent imperméabilisant, on ajoute une huile de silicone dans une partie en masse d'environ 0,8% en masse.

7. Procédé selon la revendication 5 ou 6, **caractérisé en ce que** la plaque isolante est fabriquée en fonction de la formulation de base suivante, rapportée à la partie en masse de la suspension matière solide/eau dont le rapport de masse eau/matière solide se situe entre 0,50 et 0,65, de préférence à environ 0,58:
- ciment : 35 à 45 % en masse, de préférence environ 40% en masse,
- poudre de quartz: 45 à 55 % en masse, de préférence environ 50 % en masse, et
- chaux : 5 à 15 % en masse, de préférence environ 10% en masse.

8. Procédé selon l'une des revendications 5 à 7, **caractérisé en ce que** les corps de plaque mis en autoclave sont dotés d'un agent d'adhésivité sur au moins une partie de leur surface.

9. Procédé selon la revendication 8, **caractérisé en ce que** les corps de plaque sont immergés dans un bain d'agent d'adhésivité.
